# EUROPÄISCHE PATENTSCHRIFT

(11) **EP 1 849 723 B1**
(45) Veröffentlichungstag und Bekanntmachung des Hinweises auf die Patenterteilung: **16.07.2008**
(21) Anmeldenummer: 06008470.4
(22) Anmeldetag: 25.04.2006
(51) Int. Cl.: B65G 17/08, B65G 17/40

(54) **Förderkette**
Conveyor chain
Chaîne transporteuse

(43) Veröffentlichungstag der Anmeldung: 31.10.2007
(73) Patentinhaber: EWAB Holding AG, 6006 Luzern (CH)
(72) Erfinder: Oppermann, Walter, 34346 Hann. Münden (DE)
(74) Vertreter: Rehberg Hüppe + Partner

(56) Entgegenhaltungen:
- EP-A- 0 083 119
- EP-A- 0 323 819
- US-A- 3 768 631
- US-A- 6 079 552

## Beschreibung

### TECHNISCHES GEBIET DER ERFINDUNG

Die Erfindung bezieht sich auf eine Förderkette mit einer Mehrzahl von Kettengliedern, wobei zwischen jeweils zwei in einer Förderrichtung aufeinander folgenden Kettengliedern ein Gelenk ausgebildet ist, das zwei senkrecht zu der Förderrichtung und quer zueinander verlaufende Schwenkachsen aufweist, wobei das Gelenk einen zwischen zwei Wangen des einen Kettenglieds an seinem Ende in Richtung der einen Schwenkachse verlaufenden Schwenklagerbolzen und ein auf dem Schwenklagerbolzen um die eine Schwenkachse verschwenkbar gelagertes Zwischenglied aufweist, an dem das andere Kettenglied an seinem anderen Ende um die andere Schwenkachse verschwenkbar abgestützt ist.

Weiterhin bezieht sich die Erfindung auf eine Transportvorrichtung für Werkstückträger mit einer solchen Förderkette und einem Antrieb, der ein an den Kettengliedern der Förderkette angreifendes Antriebsrad aufweist.

### STAND DER TECHNIK

Bei der einer Förderkette der eingangs beschriebenen Art in einer Transportvorrichtung für Werkstückträger läuft der nutzbare Teil der Förderkette in einer Rinne einer Förderbahn. Der Verlauf der Förderbahn kann Krümmungen In der Horizontalen und auch Steigungen bzw. Gefälle zur Horizontalen aufweise. Zudem ist die Förderkette regelmäßig endlos ausgebildet, wobei sie vom Ende der Förderbahn kopfüber an deren Beginn zurückgeführt wird. Dabei umschlingt die Förderkette mit vergleichsweise kleinem Krümmungsradius ein Antriebsrad des Antriebs für das Vorziehen die Förderkette. Hieraus wird deutlich, dass die einzelnen Kettenglieder einer Förderkette sowohl um eine horizontale als auch um eine vertikale quer zu der Förderrichtung verlaufende Achse erheblich gegeneinander verschwenkbar sein müssen, wobei die größte Verschwenkbarkeit für das Umschlingen des Antriebsrads um die horizontale Achse gegeben sein muss. Diese Verschwenkbarkeiten werden bei einer Förderkette der eingangs beschriebenen Art durch das zwischen den aufeinander folgenden Kettengliedern vorgesehene Gelenk bereitgestellt.

Eine Förderkette der eingangs beschriebenen Art ist aus der US 3,768,631 bekannt. Hier verläuft der Schwenklagerbolzen in horizontaler Richtung zwischen zwei seitlichen Wangen an dem hinteren Ende des vorauseilenden Kettenglieds. Als Zwischenglied ist auf diesem Schwenklagerbolzen in der Mitte zwischen den seitlichen Wangen des vorauseilenden Kettenglieds ein zylinderförmiger Gelenkkopf verschwenkbar gelagert. Während der Schwenklagerbolzen die eine horizontale Schwenkachse des Gelenks definiert, definiert der zylinderförmige Gelenkkopf mit seiner vertikal ausgerichteten Zylinderachse die andere Schwenkachse des Gelenks. Dazu umschlingt ein zylindermantelsegmentförmiger Bereich an dem vorderen Ende des nachallenden Kettenglieds den Gelenkkopf, wobei sich dieser vordere Bereich beidseitig zwischen den seitlichen Wangen am hinteren Ende des voreilenden Keitenglieds und dem Gelenkkopf hindurch erstreckt und Ausnehmungen für den Schwenklagerbolzen aufweist. Die einzelnen Kettenglieder weisen dabei einen V-förmigen unterbau auf, dessen frei endenden Schenkel die seitlichen Wangen am hinteren Ende des voreilenden Kettenglieds ausbilden, und dessen Spitze abgerundet ist, um den zylindermantelsegmentförmigen Bereich am vorderen Ende des nacheilenden Kettenglieds auszubilden, der den zylinderförmigen Gelenkkopf umschließt. Der Oberbau jedes Kettenglieds Ist eine mit diesem V-förmigen Unterbau einstückig ausgebildete Platte, die konturiert ist, um eine möglichst geschlossene obere Oberfläche der Förderkette auszubilden.

Die aus der US 3,768,631 bekannte Förderkette weist zwei wesentliche Nachteile auf. Der eine Nachteil besteht darin, dass es bei einem direkten Kontakt zwischen dem zylindermantelsegmentformigen Bereich am vorderen Ende des nacheilenden Kettenglieds und den seitlichen Wangen am hinteren Ende des vorellenden Kettenglieds zu Reibung zwischen identischen Materialien kommt, die mit einer störenden Geräuschentwicklung und einer erhöhten Abnutzung verbunden ist. Der andere Nachteil besteht darin, dass die bekannte Förderkette eine unerwünscht hohe Elastizität aufweist, die in eine Neigung zum Auftreten des sogenannten Stick-Slip-Effekts resultiert. Als Gegenmaßnahme gegen das Auftreten des Stick-Slip-Effekts müssen bei der bekannten Förderkette die Kettenlängen kürzer gehalten werden, als dies beispielsweise bezüglich der über die Kettenlänge zur Verfügung zu stellenden Antriebsleistung notwendig wäre. Dies bedeutet konkret, dass eine vergleichsweise große Anzahl an Antrieben mit zugehörigen Ansteuerungen bereitgestellt werden muss, was die Kosten einer Fördereinrichtung stark in die Höhe treibt.

Zur Vermeidung des direkten Kontakts gleicher Materialien bei den aufeinander folgenden Kettengliedern wird in der EP 0 323 819 A1 für eine aus der US 3,768,631 bekannte Förderkette vorgeschlagen, auf dem horizontal verlaufenden Schwenklagerbolzen eine zylindermentelsegmentförmige Halbschale zu lagern, die den zylindermantelsegmentförmigen Bereich am vorderen Ende des nachlaufenden Kettenglieds umschließt. Diese Halbschale ist somit zwischen den seitlichen Wangen an dem hinteren Ende des vorderen Kettenglieds und dem zylindermantelsogmentförmigen Bereich am vorderen Ende des nachfolgenden Kettenglieds angeordnet und stellt, wenn sie aus einem anderen Material als die Kettenglieder selbst ausgebildet ist, sowohl auf ihrer innen- als auch ihrer Außenseite eine günstige Materialpaarung ungleicher Materialien für die Reibung zwischen den Kettengliedern bereit.

Ein ähnlicher Lösungsansatz zur Beseitigung der Paarung identischer Materialien ist in der EP 0 083 119 beschrieben. Hier greifen von einem metallischen Beschlag zur Verstärkung der Oberseite der Kettenglieder abgebogene Flanken zwischen die seitlichen Wangen an dem hinteren Ende des voreilenden Kettenglieds, die einen direkten Kontakt des zylindermenteisogmentförmigen Bereits am vorderen Ende des nacheilenden Kettenglieds mit den seitlichen Wangen vermelden, Stattdessen kommt der Kunststoff, aus dem die Kettenglieder im Wesentlichen aufgebaut sind, mit dem Metall des Beschlags in Kontakt.

Zur Vermeidung des zweiten oben angesprochenen Problems, des Stlck-Slip-Effekts, ist es aus der US 6,079,552 bekannt, eine V-förmige metallische Verstärkung vorzusehen, die sich von der Innenseite der einen seitlichen Wange am hinteren Ende des vorlaufenden Kettenglieds durch den zylindermantelförmigen Bereich am vorderen Ende des Kettenglieds, wo sie den zylinderförmigen Gelenkkopf umschlingt, bis an die innenseite der gegenüberliegenden seitlichen Wange an dem hinteren Ende des Kettenglieds erstreckt. Dabei ist der in die seitlichen Wangen eingreifende Schenklagerbolzen in Bohrungen in der Verstärkungseinlage geführt, so dass sich die Elastizität dieser Förderkette auf die Elastizität der Verstärkungseinlage, des zylindermantelförmigen Gelenkkopfs und des dazwischen verlaufenden Schwenklagerbolzens beschränkt, Bei dieser bekannten Förderkette wird die seitliche Führung der Kettenglieder aneinander nicht zwischen den seitlichen Wangen an dem hinteren Ende des vorlaufenden Kettenglieds und dem zylindermantelsegmentförmigen Bereich an dem vorderen Ende des nachlaufenden Kettenglieds sondern durch ineinander eingreifende Zähne an seitlichen Auslegern der Kettenglieder bewirkt, Die Schwenklagerbolzen sind hier daher länger bei den anderen hier beschriebenen Förderketten.

### AUFGABE DER ERFINDUNG

Der Erfindung liegt die Aufgabe zugrunde, eine Förderkette der eingangs beschriebenen Art aufzuzeigen, die bereits von ihrer Raumform her die Gefahr des Auftretens des Stick-Slip-Effekts reduziert und bei der mit einfachen Maßnahmen ohne zusätzliche Bauteile Gleitreibungspaare aus identischen Materialien zwischen den aufeinander folgenden Kettengliedern vermeidbar sind, ohne dabei auf eine seitliche Führungen der Kettenglieder aneinander über das jeweilige Zwischenglied zu verzichten,

### LÖSUNG

Die Aufgabe der Erfindung wird durch eine Förderkette mit den Merkmalen das unabhängigen Patentanspruchs 1 gelöst. Bevorzugte Ausführungsformen der neuen Förderkette sind in den abhängigen Patentansprüchen 2 bis 16 beschrieben.

### BESCHREIBUNG DER ERFINDUNG

Bei der neuen Förderkette greifen beidseitig von dem Zwischenglied in Richtung der anderen Schwenkachse abstehende Schwenklagerbolzenelemente In Wangen an dem anderen Ende des anderen Kettenglieds ein. Das Eingreifen der Schwenklagerbolzenelemente bedeutet, dass sie sich in den Wangen an dem anderen Ende des anderen Kettenglieds ebenso abstützen, wie sich der Schwenklagerbolzen in den Wangen an dem einen Ende des einen Kettenglieds abstützt. Dabei verlaufen die Schwenklagerbolzenelemente quer zu dem Schwenklagerbolzen. Entsprechend verlaufen auch die quer zu den Schwenklagerbolzenelementen ausgerichteten Wangen an dem anderen Ende des anderen Kettenglieds quer zu den quer zu dem Schwenklagerbolzen verlaufenden Wangen an dem einen Ende des einen Kettenglieds. Das Zwischenglied ist mit den von ihm abstehenden Schwenklagerbolzen zwischen diesen beiden Wangenpaaren angeordnet, so dass die beiden aufeinander folgenden Kettenglieder nicht direkt sondern nur über das Zwischenglied miteinander in Kontakt stehen. Reibungspaare aus Identischen Materialien sind so auf das Leichteste zu vermelden. Störende Geräusch- und Verschleißquellen entfallen damit bei der neuen Förderkette. Die neue Förderkette bietet aber zugleich verbesserte Voraussetzungen zur Vermeidung des Stick-Slip-Effekts. Indem weder der Schwenklagerbolzen noch die abstehenden Schwenklagerbolzenelemente des Zwischenglieds unabgestützte Bereich aufweisen, wie sie beim Stand der Technik zumindest zwischen den dort seitlichen Wangen und dem zylindermantelförmigen Gelenkkopf In dem Bereich der Durchbrechungen des sich dort hindurch erstreckenden zylindermantelsegmentförmigen vorderen Bereichs des anderen Kettenglieds auftreten. Eine resultierende Durchbiegung des Schwenklagerbolzens führt beim Stand der Technik sogar dazu, dass dieser sich nur noch lokal an dem dort als Zwischenglied dienenden zylinderförmigen Gelenkkopf abstützt, so dass in die Elastizität der Förderkette in ihrer Förderrichtung letztlich die volle Biegeelastizität des Schwenklagerbolzens zwischen den beiden seitlichen Wangen des einen Kettenglieds eingeht. Bei der neuen Förderkette gibt es keine nicht abgestützten Bereiche des Schwenklagerbolzens oder der Schwenklagerbolzenalemente, so dass diese sämtlich auf Scherung beansprucht werden, also in einer Belastungsrichtung, in der sie eine sehr hohe Steifigkeit aufweisen. Damit weist die neue Förderkette auch ohne eine Verstärkungseinlage. d. h. bei Ausbildung der eigentlichen Kettenglieder nur aus Kunststoff eine stark gesteigerte Steifigkeit auf, wie sie auch bei der bekannten, mit einer Verstärkungseinlage versehenen Förderkette nicht erreicht wird, weil dort der Schwenklagerbolzen eine besonders lange Strecke ohne Abstützung überspannt und deshalb besonders stark zur Durchbiegung neigt, was trotz der Verstärkungseinlage in eine relativ geringe Steifigkeit der bekannten Förderkette in der Förderrichtung resultiert

Bei der neuen Förderkette ist es bevorzugt, wenn das Zwischenglied in Richtung der einen Schwenkachse direkt zwischen den Wangen an dem einen Ende das einen Kettenglieds und in Richtung der anderen Schwenkachse direkt zwischen den Wangen an dem anderen Ende des anderen Kettenglieds geführt ist. Dies bedeutet, dass hier keine Zwischenhülsen oder dgl. vorgesehen sind, sondern die Abstützung des Schwenklagerbolzens und der Schwenklagerbolzenelemente direkt von den jeweiligen Wangen, in die sie eingreifen, auf das Zwischenglied übergeht. Da das Zwischenglied bereits einen unmittelbaren Kontakt zwischen den aufeinander folgenden Kettengliedern unterbindet, besteht keine Notwendigkeit, hier zusätzliche Zwischenelemente vorzusehen.

Besonders bevorzugt ist es, wenn das Zwischenglied einschließlich der von ihm abstehenden Schwenkbolzenelemente aus Metall ausgebildet ist und dabei ausschließlich über Kontaktflächen aus Kunststoff mit den Kettengliedern in Kontakt steht. Die Ausbildung des Zwischenglieds einschließlich der Schwenklagerbolzanelemente aus Metall sorgt für eine hohe Eigensteifigkeit des Zwischenglieds einschließlich der Schwenklagerbolzenelemente. Reibungspaare aus Metall einerseits und Kunststoff andererseits bieten die besten Voraussetzungen für eine geringere Geräuschentwicklung und einen geringen Verschleiß beim Betrieb der neuen Förderkette.

Jedes Kettenglied der neuen Förderkette kann einen die Kontaktfläche des Schwenklagerbolzene mit dem Zwischenglied umfassenden einstückigen Formkörper aus Kunststoff aufweisen. Dabei kann der gesamte Schwenklagerbolzen an dem einen Ende des Kettenglieds Teil des Formkörpers aus Kunststoff sein. Die einstückige Ausbildung des Schwenklagerbolzens mit dem Rest des Kettenglieds aus Kunststoff führt nicht zwangsläufig zu einer unerwünscht hohen. Elastizität der neuen Förderkette, da sich der schwenklagerbolzen über seine gesamte Länge zwischen den angrenzenden Wangen des jeweiligen Kettenglieds an dem Zwischenglied abgestützt ist. Zudem kann diese Länge kurz gehalten werden, insbesondere dadurch, dass der Schwenklagerbolzen In Richtung der Schwenkachse verläuft, in der die Kettenglieder die geringere Erstreckung senkrecht zu der Förderrichtung aufweisen. Während bei den Förderketten nach dem Stand dar Technik der Schwenklagerbolzen horizontal verlief, verläuft er bei der neuen Förderkette entsprechend vertikal und nur aber eine kurze Strecke, über die keine Gefahr eines Durchbiegens besteht.

Wenn die neue Förderkette besonders hohen Lasten in der Förderrichtung ausgesetzt wird, kann der Schwenklagerbolzen eine Verstärkungseinlage aufweisen. Zu diesem Zweck kann beispielsweise ein Stahlbolzen in den ansonsten einstückig mit dem Rest des jeweiligen Kettenglieds aus Kunststoff ausgebildeten Schwenklagerbolzen, eingesetzt sein, der die Scherfestigkeit des Schwenklagerbolzens noch weiter erhöht. Grundsätzlich kann auch der gesamte Schwenklagerbolzen aus Metall ausgebildet werden. Dann ist jedoch eine Gleithülse um den Schwenklagerbolzen herum sinnvoll, um einen Metall auf Metall-Kontakt mit dem metallischen Zwischenglied zu vermeiden.

Wenn eine Verstärkungseinlage für den Schwenklagerbolzen vorgesehen ist, kann diese in vorteilhafter Weise Teil eines metallischen Beschlags zur Verstärkung des Kettenglieds an seiner Oberseite sein.

Es ist bei der neuen Förderkette sehr bevorzugt, wenn der Schwenklagerbolzen durchgängig zwischen den Wangen an dem ersten Ende des jeweiligen Kettenglieds verläuft und damit einem Aufspreizen des jeweiligen Kettenglieds zwischen den Wangen unter Last entgegenwirkt. Diese Gefahr eines Aufspreizens ist auf ein vernachlässigbares Maß minimiert, wenn der Schwenklagerbolzen durchgängig und einstückig mit dem Rest des jeweiligen Kettenglieds ausgebildet ist. Grundsätzlich kann der Schwenklagerbolzen aber auch eine Unterbrechung zwischen den Wangen an dem ersten Ende des einen Kettenglieds aufweisen, wenn z.B. aufgrund einer geringen Belastung keine Gefahr eines Aufspreizens das Kettenglieds zwischen den Wangen besteht, oder diese Gefahr durch andere Verstärkungsmaßnahmen beherrscht wird.

Die Schwenklagerbolzenelemente des Zwischenglieds sind vorzugsweise in einen Grundkörper des Zwischenglieds eingeschraubt. Durch das Einschrauben der Schwenklagerbolzenelemente in den Grundkörper können die Kettenglieder der neuen Förderkette zusammengebaut und bei Bedarf auch wieder auseinander gebaut werden. Grundsätzlich ist es auch möglich, die Schwenklagerbolzenelemente des Zwischenglieds in einen Grundkörper des Zwischenglieds einzupressen, hierdurch wird Jedoch ein gewolltes zerstörungsfreies Trennen der Kettenglieder erschwert und erfordert zumindest den Einsatz von Spezialwerkzeug.

Um ein Aufspreizen der Kettenglieder zwischen den Wangen zu vermeiden, in die die schwenklagerbolzenelemente eingreifen, können die Schwenklagerbolzenelemente Köpfe mit verstärktem Durchmesser aufweisen, die dieser Spreizbewegung entgegenwirken. Die Durchmesserverstärkung der Köpfe der Schwenklagerbolzenelemente kann stufenförmig sein, wodurch an der Unterseite jedes Kopfes ein sich an der jewelligen Wange des Kettenglieds abstützender Radialbund ergibt. Die Durchmesserverstärkung der Köpfe der Schwenklagerbolzenelemente kann aber auch stetig sein, so dass die Schwenklagerbolzenelemente bereichsweise beispielsweise kegelförmig sind. Bei in einen Grundkörper des Zwischenglieds eingeschraubten Schwenklagerbolzenelementen bewirkt eine zu der stetigen Durchmesserverstårkung der Schwenklagerbolzenelemente komplementäre Ausbildung der diese aufnehmenden Ausnehmungen in den Wangen des Kettenglieds und auch in dem äußeren Teil des Grundkörpers des Zwischenglieds beim Einführen Jedes Schwenklagerbolzenelements in seine Ausnehmung eine automatische Ausrichtung und Zentrierung in Bezug auf das Gewinde in dem Grundkörpers des Zwischenglieds, in das er einzuschrauben Ist. Eine kegelige Passung zwischen jedem Sohwenklagerbolzenelement und dem Grundkörper im äußeren Bereich des Grundkörpers des Zwischenglieds ermöglicht zudem einen festen Reibschluss, der das eingeschraubte Schwenklagerbolzenelement zuverlässig an dem Grundkörper sichert.

Alternativ zur Ausbildung des Zwischenglieds aus einem Grundkörper mit eingeschraubten Schwenklagerbolzenelementen kann das gesamte Zwischenglied einschließlich der Schwanklagerbolzenelemente ein einstückiger Formkörper sein, bei dem es sich um ein Guss- oder Schmiedeteil handeln kann und der in einen Formkörper aus Kunststoff des Jeweils anderen Kettenglieds eingegossen sein kann, wobei er aber diesem gegenüber um die zweite Schwenkachse verschwenkbar ist. Derartige eingegossene aber gegenüber einem Formkörper aus Kunststoff dennoch verschwenkbare Formkörper aus einem anderen Kunststoff oder aus Metall sind grundsätzlich bekannt. Wenn das Zwischenglied derart zusammenhängend mit dem jeweils anderen Kettenglied hergestellt wird, muss der Schwenklagerbolzen, über den das Zwischenglied an dem jeweils einen Kettenglied abgestützt ist, ein separates, in den Formkörper des Kettenglieds aus Kunststoff eingesetztes Teil sein.

Der Grundkörper des Zwischenglieds, von dem die Schwenklagerbolzenelemente abstehen, ist vorzugsweise kreisringförmig oder kreisringsegmentförmig, d. h. er weist nicht nur eine zylindermantelförmige Anlagefläche zur Anlage an den Schwenklagerbolzen sonder auch einen abgerundeten Außenumfang auf. Eine kreisringsegmentformige Ausbildung des Grundkörpers ist für den Anbau des Zwischenglieds an einen einstückig mit dem Rest des jeweiligen Kettenglieds ausgebildeten Schwenklagerbolzen sinnvoll.

Zur Vermeidung des Ablagerns von Verunreinigungen, die zwischen den Schwenklagerbolzen und das Zwischenglied treten können, ist es aber bei einem kreissegmentförmigen Zwischenglied bevorzugt, wenn das fehlende Kreissegment durch einen Einsatzkörper aufgefüllt wird. Dieser Einsatzkörper kann beispielsweise aus Kunststoff bestehen und durch Formschluss in dem Bereich des fehlenden Kreissegments verankert sein.

Der Querschnitt des Grundkörpers des Zwischenglieds radial zu der einen Schwenkachse ist vorzugsweise rechteckig, insbesondere quadratisch oder auch abgerundet, insbesondere kreisförmig. Die Gesichtspunkte, unter denen der Querschnitt im Einzelfall festzulegen ist, umfassen eine gute Abstützung der Schwenklagerbolzenelemente, insbesondere wenn diese in den Grundkörper eingeschraubt sind, eine hohe Formsteifigkeit des, Grundkörpers und einen geringen Raumbedarf innerhalb eines die angrenzenden Zwischenglieder ausbildenden Formkörpers.

Bei der neuen Förderkette ist es ohne weiteres realisierbar, dass sich die beiden Schwenkachsen jedes Gelenks zwischen zwei aufeinander folgenden Kettengliedern in einem Punkt schneiden. Sie können aber auch in der Förderrichtung leicht versetzt zueinander verlaufen. Günstigere Belastungsverhältnisse für die an das Zwischenglied der neuen Förderkette angrenzenden Wangen der Kettenglieder ergeben sich jedoch, wenn sich die beiden Schwenkachsen jedes Gelenks exakt schneiden.

Wenn an dem einen Ende des einen Kettenglieds sich an dessen Oberseite bis über die Wangen an dem anderen Ende des anderen Kettenglieds erstreckende Plattensegmente quer zu der Förderrichtung vorstehen, wird bei der neuen Förderkette ein effektiver Eingriffschutz zwischen die einzelnen Kettenglieder auch dann bereitgestellt, wenn diese durch eine enge Kurve laufen, egal ob diese Kurve horizontal um den bei der neuen Förderkette vorzugsweise vertikal verlaufenden Schwenklagerbolzen oder vertikal um die bei der neuen Förderkette vorzugsweise horizontal verlaufenden Schwenklagerbolzenelemente herum verläuft.

Während die Kettenglieder der Förderketten aus dem Stand der Technik regelmäßig jeweils nur eine Abstützfläche zwischen zwei Wangen des jeweiligen Kettenglieds aufweist, weisen die Kettenglieder einer speziellen Ausführungsform der neuen Förderkette jeweils zwei Abstützflächen zur Übertragung einer Vortriebskraft auf die Förderkette auf, die senkrecht zu der Förderrichtung jeweils auf Höhe einer der Wangen des Kettenglieds nebeneinander liegen, in welche die Sahwenkiagerbolzenelamente eingreifen. Hierdurch wird nicht nur die Größe der Abstützfläche erhöht, so dass ihre spezifische Belastung reduziert und damit letztlich die Standzeit der Förderkette erhöht, sondern es wird auch die Möglichkeit geschaffen, einer Aufspreizung dieser Wangen durch eine Materialverstärkung in ihrem Verbindungsbereich ohne Rücksicht auf den dortigen Eingriff der Zähne eines Antriebsritzels gezielt entgegen zu wirken.

Konkret können die beiden Abstützflächen an den freien Enden der beiden Wangen Jedes Kettenglieds angeordnet sein, in welche die Schwenklagerbolzenelemente eingreifen.

Eine erfindungsgemäße Transportvorrichtung für Werkstücksträger mit einer neuen Förderkette in der speziellen Ausführungsform mit zwei Abstützflächen je Kettenglied weist einen Antrieb auf, dessen Antriebsrad ein Paar von auf einer Antriebswelle nebeneinander angeordneten, gemeinsam an den Kettengliedern angreifenden Antriebsritzein umfasst.

Vorteilhafte Weiterbildungen der Erfindung ergeben sich aus den Patentansprüchen, der Beschreibung und den Zeichnungen. Die in der Beschreibungseinieitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - Insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine perspektivische Ansicht eines Kettenglieds mit einem Zwischenglied in einer ersten Ausführungsform der neuen Förderkette in einer Ansicht schräg von oben.
- **Fig.2**: zeigt eine perspektivische Ansteht des Kettenglieds mit dem Zwischenglied gemäß Flg. 1 in einer Ansicht schräg von unten.
- **Fig. 3**: zeigt eine perspektivische Explosionsansicht das Zwischenglieds gemäß Fig. 1 und 2.
- **Fig. 4**: zeigt eine perspektivische Ansicht eines Kettenglieds mit einem Zwischenglied in einer zweiten Ausführungsform der neuen Förderkette, die bezüglich der Integration eines Schwenklagerbolzens in das Kettenglied variiert ist, In einer Ansicht schräg von oben.
- **Fig. 5**: zeigt eine perspektivische Ansicht des Kettenglieds mit dem Zwischenglied gemäß Fig. 6 in einer Ansicht schräg von unten.
- **Fig.6**: zeigt eine perspektivische Einzeitellansicht eines Schwenklagerbolzens einer abgewandelten Ausführungsform des Kettenglieds gemäß Fig, 4 und 5.
- **Fig.** 7: zeigt eine perspektivische Ansicht eines Kettenglieds mit einem Zwischenglied in einer dritten Ausführungsform der neuen Fördarkette, die bezüglich der Integration eines Schwenklagerbolzens In das Kettenglied weiter variiert ist, in einer Ansicht schräg von unten.
- **Fig. 8**: zeigt eine perspektivische Ansicht eines Kettenglieds mit einem Zwischenglied in einer vierten Ausführungsform der neuen Förderkette, die bezüglich der Ausbildung von Abstützflächen für ein Antriebsrad an dem Kettenglied und der Ausbildung von Schwenklagerbolzenelementen des Zwischenglieds variiert ist, in einer Ansicht schräg von oben.
- **Fig. 9**: zeigt eine perspektivische Ansicht des Kettenglieds mit dem Zwischenglied gemäß Fig. 8 in einer Ansicht schräg von unten; und
- **Fig. 10**: zeigt eine perspektivische Explosionsansicht des Zwischenglieds gemäß Fig. 8 und 9.
- **Fig. 11**: zeigt eine perspektivische Seitenansicht einer Abfolge von drei Kettengliedern der Förderkette in der Ausführungsform gemäß Fig. 8 und 9 auf einem Antriebsrad für die Förderkette.

### FIGURENBESCHREIBUNG

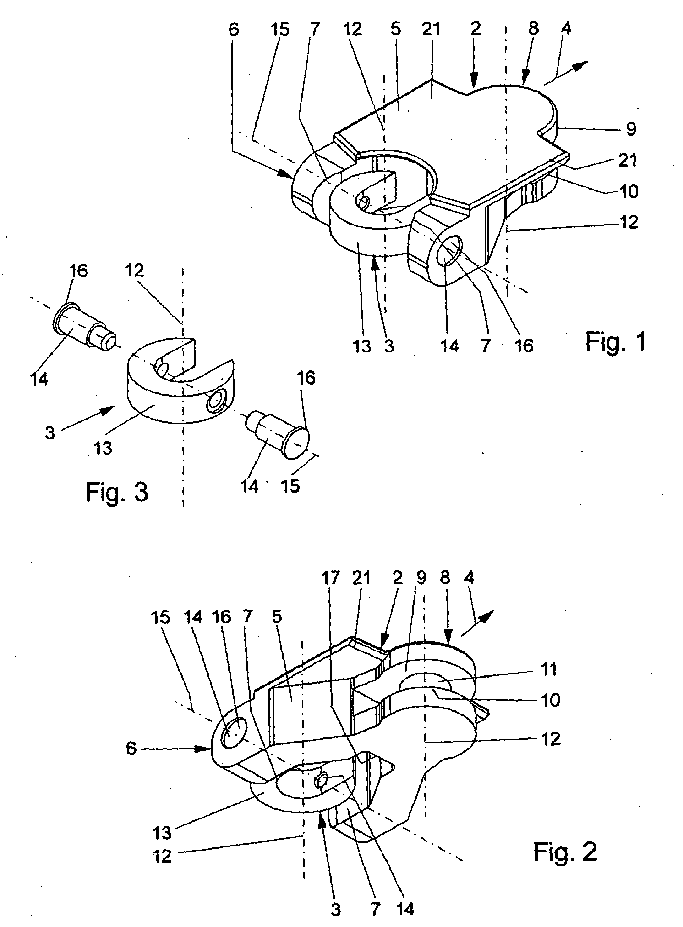

Eine Förderkette, auf die sich die vorliegende Erfindung primär bezieht, besteht aus einer Mehrzahl von Einheiten, von denen eine in den **Fig. 1 und 2** in zwei perspektivischen Ansichten gezeigt ist, dass heißt aus einer Mehrzahl von Kettengliedern 2 die durch Zwischenglieder 3 miteinander verbunden sind. Die Explosionszeichnung gemäß Fig. 3, zeigt die Einzelteile eines der Zwischenglieder 3. Jedes Kettenglieder 2 weist einen Grundkörper 5 aus Kunststoff auf, der an einem in einer Förderrichtung 4 hinten liegenden Ende 6 des Kettenglieds 2 seitliche Wangen 7 ausbildet, während er an dem vorderen Ende 8 des Kettenglieds 2 eine obere Wange 9 und eine untere Wange 10 ausbildet, zwischen denen ein Schwenklagerbolzen 11 als Tell des Grundkörpers 5 verläuft. Auf dem Schwenklagerbolzen des auf das dargestellte Kettenglied 2 folgenden, hier selbst aber nicht dargestellten Kettenglieds ist um eine vertikale Schwenkachse 12 verschwenkbar das hier wieder dargestellte Zwischenglied 3 gelagert, wobei sich ein kreissegmentförmiger Grundkörper 13 des Zwischenelements 3 bis auf ein fehlendes Kreissegment von der Breite des Schwenklagerbolzens 11. um den Schwenklagerbolzen herum erstreckt. Das fehlende Kreissegment ermöglicht ein Aufschieben des Grundkörpers 13 auf den Schwenklagerbolzen von vorne oder von der Seite und ein anschließendes Verdrehen des Grundkörpers 13 auf dem Schwenklagerbolzen. Dieses Aufschieben bzw, Verdrehen Ist jedoch nur möglich, so lange zumindest noch nicht beide von zwei Schwenklagerbolzenetomenten 14 in den Grundkörper 13 eingeschraubt sind die eine zu der Schwenkachse 12 quer verlaufende zweite Schwenkachse 15 definieren. Während das Zwischenglied 3 jeweils gegenüber dem nachfolgenden Kettenglied um die Schwenkachse 12 verschwenkbar ist, ist das jeweils dargestellte Kettenglied 2 um die Schwenkachse 15 gegenüber dem Zwischenglied 3 verschwenkbar. Köpfe 16 der Schwenklagerbolzenelemente 14 mit verstärktem Durchmesser stützen sich außen an den Wangen 7 der Kettenglieder 2 ab und verhindern so ein Aufspreizen der Wangen 7 unter Zuglast auf die Förderkette 1. Gewünscht ist, dass die Wangen 7 direkt an dem Grundkörper 13 des Zwischenglieds 3 anliegen, so dass die Kettenglieder 2 seitlich aneinander geführt sind. Ebenso ist es erwünscht, dass die Wangen 9 und 10 des nachfolgenden Kettenglieds direkt an dem jeweiligen Grundkörper 13 des Zwischenglieds 3 anliegen, um auch eine vertikale Führung der Kettenglieder aneinander sicherzustellen. Die Kettenglieder sollen sich nur um die Schwenkachsen 12 und 15 relativ zueinander bewegen, Dabei ist dadurch, dass sowohl der Schwenklagerbolzen 11 als auch die Schwenklagerbolzenalements 14 unter Zuglast auf die Förderkette 1 ausschließlich auf Scherung beansprucht werden, eine hohe Steifigkeit der Verbindung der Kettenglieder 2 untereinander gegeben. Der Grundkörper 13 der Zwischenelemente 3 kann als vollständig formsteif angesehen werden. Überdies stützt er sich an dem Querbolzen 11 ab, und das bei ihm fehlende Teilsegment kann durch einen ihn weiter aussteifenden Einsatzkörper aufgefüllt sein. Die Ausbildung des Schwenklagerbolzens 11 aus Kunststoff einstückig mit dem Formkörper 5, der das jeweilige Kettenglied im Wesentlichen ausbildet, erhöht die Elastizität der Förderkette 1 nicht nennenswert, weit der Querbolzen 11 ein großes Durchmesser zu Länge-Verhältnis aufweist Ein Antriebsrad zum Vorziehen der Förderkette aus einer Mehrzahl von Kettengliedern, 2 des hier dargestellten Typs greift unten an den Formkörpern 5 an Abstützflächen 17 an. Der Zusammenbau der Förderkette 1 erfolgt durch das Einschrauben der Schwenkbolzemalemente 14 in den auf dem Schwenklagerbolzen des nachfolgenden Kettenglieds angeordneten Grundkörper 13 des Zwischenelements 3 durch die Wangen 7 des dargestellten Kettenlieds 2. An dem Ende 8 an der Oberseite des Kettenglieds 2 quer zu der Förderrichtung 4 vorstehende Plattensegmente 21 erstrecken sich bis über die Wangen 7 an dem Ende 6 eines hier nicht dargestellten vorausellenden Kettenglieds und bilden so einen Fingerschutz aus, der ein Eingreifen zwischen die Kettenglieder auch dann verhindert, wenn diese um die Schwenkachse 12 oder die Schwenkachse 15 gegeneinander verschwenkt sind.

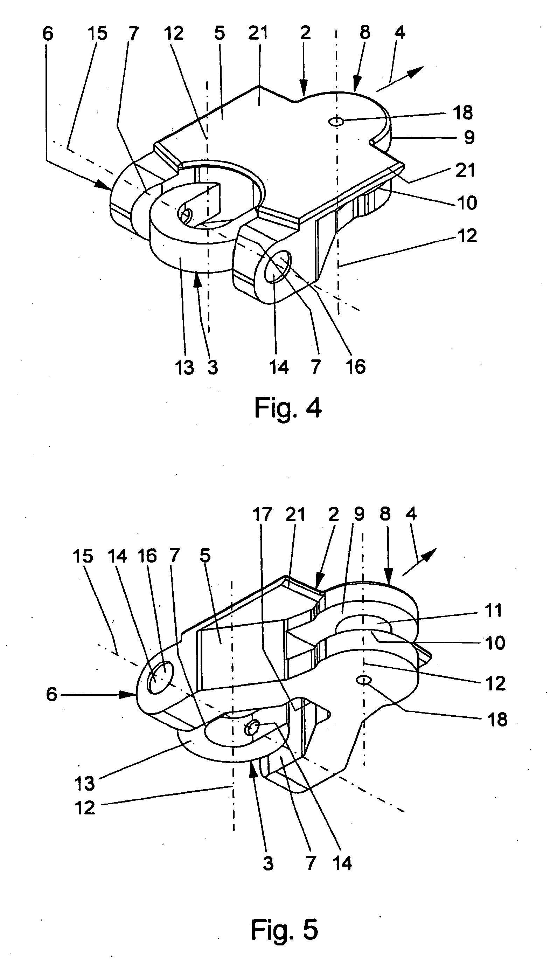

Die in **Fig. 4 und 5** anhand einer ihrer Einheiten gezeigte Ausführungsform einer Förderkette unterscheidet sich von derjenigen gemäß Fig. 1 dadurch, dass der Schwenklagerbolzen 11 mit einer im Bereich der Achse 12 koaxial angeordneten Verstärkungseinlage 18 versehen ist. Die Verstärkungseinlage 18 ist ein sich durch die Wangen 9 und 10 und den dazwischen liegenden Schwenklagerbolzen 11 hindurch erstreckender Metallstift. Die Verstärkungseinlage 18 kann Teil eines (hier nicht dargestellten) metallischen Beschlags für die Oberseite des jeweiligen Kettenglieds 2 sein.

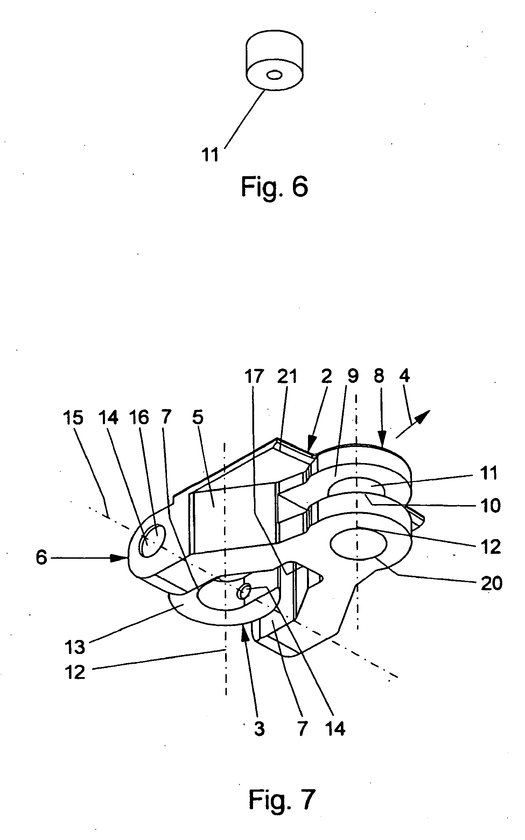

Durch die Verstärkungseinlage 18 kann auch ein als separates Teil ausgebildeter Schwenklagerbolzen 11 an dem Grundkörper 15 gesichert werden. Ein solcher Schwenklagerbolzen 11 ist in Fig. 6 dargestellt. Die Befestigung eines separaten Schwenklagerbolzens 11, auf dem bereits ein mit dem Jeweils vorlaufenden Kettenglied verbundenes Zwischenglied angeordnet ist, ist eine weitere Möglichkeit, die Kettenglieder der Förderkette untereinander zu verbinden. Im Falle eines separaten Schwenklagerbolzens kann der Grundkörper des Zwischenelements überdies geschlossen kreisringförmig ausgebildet sein.

Bei der Ausführungsform der Förderkette 1 gemäß Fig. 7 ist das Zwischenglied 3 einschl. des Grundkörpers 13 und der Schwenklagerbolzenelemente 14 ein einstückig geschlossener Formkörper 19 ist, bei dem es sich beispielsweise um ein Guss- oder Schmiedeteil handelt. Dieser Formkörper 18 ist In den Formkörper 5 des jeweils vorlaufenden Kettenglieds 2 eingegossen, aber diesem gegenüber um die Schwenkachse 15 verschwenkbar. Um unter dieser Voraussetzung eine Montage der Förderkette 1 zu ermöglichen, kann der separate, mit einer Verstärkungseinlage an den Wangen 9 und 10 des Grundkörpers zu sichernde Schwenklagerbolzen 11 gemäß Fig. 6 verwendet werden. Hier ist der Schwenklagerbolzen 11 jedoch als Teil eines In die Wangen 9 und 10 eingepresster Bolzen 20 ausgebildet. Zusätzlich kann auch in diesem Fall der Bolzen 20 Teil eines Verstärkungsbeachiegs für die Oberseite jedes Kettenglieds 2 der Förderkette 1 sein.

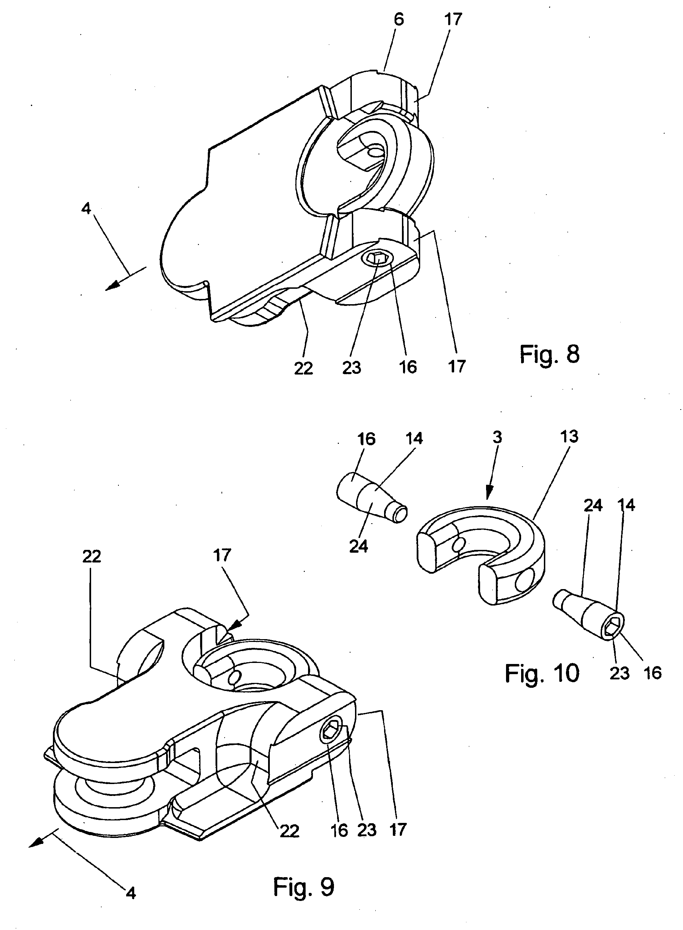

Das in den **Fig. 8 und 9** dargestellte Kettenglied 2 und das In diesen Figuren sowie in **Fig. 10** in einer separaten Explosionszeichnung wiedergegebene Zwischenglied 3 unterscheiden sich in folgenden Details von den bisher beschriebenen Ausführungsformen der neuen Förderkette, wobei diese Unterschiede bei verschiedenen Ausführungsformen der neuen Förderkette auch einzeln auftreten können. An dem Grundkörper 15 des Kettenglieds 3 ist hier keine zentrale Abstützfläche 17 für den Angriff eines Antriebsrads zwischen den Wangen 7 vorgesehen, vielmehr umschließt der Grundkörper 15 das Zwischenglied 3 In seinem Übergangsbereich zwischen den Wangen 7 so eng als möglich, wodurch die Wangen 7 gegenüber einem Aufspreizen stärker abgestützt sind. Stattdessen sind zwei Abstützflächen jeweils dort ausgebildet wo die Wangen 7 an dem Ende 6 des Kettenglieds 2 enden. Diese Abstützflächen sind In der Summe größer als die eine Abstützfläche 17 gemäß den Fig. 2, 5 und 7, so dass bei gleicher kraftübertragung über die Abstützflächen 17 auf das Kettenglied 2 die Flächenpressung reduziert ist, was eine höhere Lebensdauer des Kettenglieds verspricht. Um die Abstützflächen 17 bei dem Kettenglied 2 gemäß den Fig. 8 und 9 für ein Antriebsrad zugänglich zu machen, weist der Grundkörper vor den Wangen 7 Ausnehmungen 22 auf. Das Zwischenglied 3 gemäß den Fig. 8 und 9 unterscheidet sich von dem Zwischenglied der bisher beschriebenen Ausführungsformen der Förderkette sowohl bezüglich der Ausbildung seines Grundkörpers 13 als auch seiner darin verschraubten Schwenklagerbolzerielemente 14. Das dabei in den Köpfen 16 der Schwenklagerbolzenelemente 14 Werkzeugangrifffiachen 23 zu erkennen sind, liegt jedoch nur daran, dass diese bei den bisher beschriebenen Ausführungsformen des Zwischenglieds 3 mit verschraubten Schwenklagerbolzenelementen 14 weggelassen wurden, obwohl sie auch hier vorhanden sind Entscheidend ist vielmehr, dass sich der Durchmesser der Schwenklagerbolzanelemente 14 gemäß den Fig. 8 bis 10 nicht stufenförmig zu Ihrem Kopf 16 hin erhöht, sondern In einem kegeligen Bereich 24, der sich durch die jeweilige Wange 7 des Kettenglieds 2 bis in den Grundkörper 13 des Zwischenglieds 3 hinein erstreckt, stetig ansteigt. Dieser kegelige Bereich 24 bzw. die zu ihm komplementären Oberflächen In den Wangen 7 und dem Grundkörper 13. zentrieren das jeweilige Schwenkiagarboizeneiement 14 in Bezug auf das Befestigungsgewinde in dem Grundkörper 13 des Zwischenglieds 3. Darüber hinaus ist über den kegelförmigen Bereich 24 und die komplementäre Gegenfläche an dem Grundkörper 13 des Zwischenglieds 3 ein Kraftschluss des jeweiligen Schwenklagerbolzenelements 14 gegenüber dem Grundkörper 13 realisierbar, der eine gegenüber Wechselbelastungen beständige Verbindung dieser Bestandteile des Zwischenglieds 3 sicherstellt. Der Anteil des kegelförmigen Bereichs 24, der sich auf die Wangen 7 des Kettenglieds 2 verteilt, wirkt mit seiner Durchmesservergrößerung des Schwenklagerbolzenelements 14 dem Aufspreizen der Wangen 7 ebenso wie ein Kopf 16 entgegen, der durch eine stufenförmige Durchmesservergrößerung gebildet ist. Letztlich weist der Grundkörper 13 des Zwischenglieds 3 gemäß den Fig. 8 bis 10 einen abgerundeten radialen Querschnitt auf. Durch die Querschnittsgestaltung des Grundkörpers 13 kann stark Einfluss auf die Kraftübertragung zwischen dem Zwischenglied und dem hiervon umschlossenen Schwenklagerbolzen des jeweils nachfolgenden Kettenglieds genommen werden.

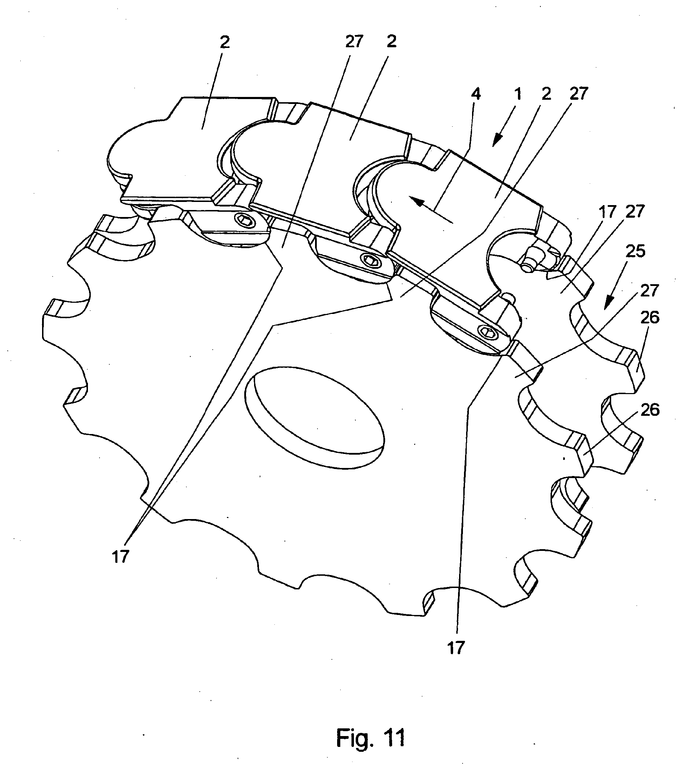

Fig. 11 skizziert die Anordnung von drei in der Förderrichtung 4 aufeinander folgenden Kettengliedern 2 einer Förderkette 1 auf einem Antriebsrad 25 eines Antriebs für die Förderkette 1. Das Antriebsrad 25 weist zwei identische und axial voneinander beabstandete Antriebsritzel 26 auf, die mit ihren Zähnen 27 jeweils in die Ausnehmungen 22 ein und an den Abstützflächen 17 der Kettenglieder 2 angreifen, um die Förderkette 1 in der Förderrichtung 4 anzutrelben. Die beiden Antriebsritzel 26 sind bei dem vollständigen Antrieb auf einer gemeinsamen, hier nicht dargestellten Antriebswelle angeordnet und werden über diese synchron angetrieben. Aufgrund der sehr hohen Steifigkeit der neuen Förderkette 1 In der Förderrichtung 4 kann diese auch bei großer Länge mit einer relativ geringen Anzahl von Antrieben versehen werden, ohne dass der berüchtigte Stick-Slip-Effekts aufzutreten droht. Hierdurch sind Kosteneinsparungen im Bereich der Antriebe möglich, die weit über etwaigen Zusatzaufwand für die Herstellung der neuen Förderkette aufgrund des vorzugsweise aus massivem Metall auszubildenden Zwischenglieds 3 verursacht werden.

In Elastizitätstests zeigten die verschiedenen Ausführungsformen der neuen Förderkette, obwohl diese keine zwischen den Enden 6 und 8 der Förderglieder 2 verlaufende Verstärkungseinlage aufweist, dennoch eine extrem hohe Steifigkeit. In dem typischen Beiastungsbereich einer Förderkette auf Zug von 1000 bis 4000 Newton war die Steifigkeit mindestens etwa doppelt so hoch wie bei marktüblichen Förderketten des In der Besehrelburigseinleitung dieser Anmeldung angegebenen Typs. Auch die Bruchstabilität der neuen Förderkette war gegenüber dem Stand der Technik trotz fehlender Verstarkungseinlage erheblich gesteigert.

### BEZUGSZEICHENLISTE

- 1: Förderkette
- 2: Kettenglied
- 3: Zwischenglied
- 4: Förderrichtung
- 5: Formkörper
- 6.: Ende
- 7: Wange
- 8: Ende
- 9: Wange
- 10: Wange
- 11: Schwenklagerbolzen
- 12: Schwenkachse
- 13: Grundkörper
- 14: Schwenklagerbolzenelement
- 15: Schwenkachse
- 16: Kopf
- 17: Abstützfläche
- 18: Verstärkungseinlage
- 19: Formkörper
- 20: Bolzen
- 21: Plattensegment
- 22: Ausnehmung
- 23: Werkzeugangriffläche
- 24: Bereich
- 25: Antriebsrad
- 26: Antriebsritzel
- 27: Zahn

## Patentansprüche

1. Förderkette mit einer Mehrzahl von Kettengliedern (2), wobei zwischen jeweils zwei in einer Förderrichtung aufeinander folgenden Kettengliedern ein Gelenk ausgebildet ist, das zwei senkrecht zu der Förderrichtung und quer zueinander verlaufende Schwenkachsen (12,15) aufweist, wobei das Gelenk einen zwischen zwei Wangen (9,10) des einen Kettenglieds an seinem einen Ende in Richtung der einen Schwenkachse verlaufenden Schwenklagerbolzen (11) und ein auf dem Schwenklagerbolzen um die eine Schwenkachse (12) verschwenkbar gelagertes Zwischenglied (3) aufweist, an dem das andere Kettenglied an seinem anderen Ende um die andere Schwenkachse (15) verschwenkbar abgestützt ist, **dadurch gekennzeichnet, dass** beidseitig von dem Zwischenglied (3) in Richtung der anderen Schwenkachse (15) abstehende Schwenklagerbolzenelemente (14) in Wangen (7) an dem anderen Ende (6) des anderen Kettenglieds (2) eingreifen.

2. Förderkette nach Anspruch 1, **dadurch gekennzeichnet, dass** das Zwischenglied (3) in Richtung der einen Schwenkachse (12) direkt zwischen den Wangen (9, 10) an dem einen Ende (8) des einen Kettenglieds (2) und in Richtung der anderen Schwenkachse (15) direkt zwischen den Wangen (7) an dem anderen Ende (6) des anderen Kettenglieds (2) geführt ist.

3. Förderkette nach Ansprüchen 1 und 2, **dadurch gekennzeichnet, dass** das Zwischenglied (3) einschließlich der von ihm abstehenden Schwenklagerbolzenelemente (14) aus Metall ausgebildet ist und ausschließlich über Kontaktflächen aus Kunststoff mit den Kettengliedern (2) in Kontakt steht.

4. Förderkette nach einem der Ansprüche 1 bis 3, **dadurch gekennzeichnet, dass** jedes Kettenglied (2) einen die Kontaktfläche des Schwenklagerbolzens (11) mit dem Zwischenglied (3) umfassenden einstückigen Formkörper (5) aus Kunststoff aufweist.

5. Förderkette nach einem der Ansprüche 1 bis 4, **dadurch gekennzeichnet, dass** der Schwenklagerbolzen (11) in Richtung der Schwenkachse (12) verläuft, in der die Kettenglieder (2) ihre geringere Erstreckung senkrecht zu der Förderrichtung (4) aufweisen.

6. Förderkette nach einem der Ansprüche 1 bis 5, **dadurch gekennzeichnet, dass** der Schwenklagerbolzen (11) eine koaxial angeordnete Verstärkungseinlage (18) aufweist.

7. Förderkette nach Anspruch 6, **dadurch gekennzeichnet, dass** die Verstärkungseinlage (18) Teil eines metallischen Beschlags zur Verstärkung des Kettenglieds (2) an seiner Oberseite ist.

8. Förderkette nach einem der Ansprüche 1 bis 7, **dadurch gekennzeichnet, dass** der Schwenklagerbolzen (11) durchgängig zwischen den Wangen (9, 10) an dem einen Ende (8) des einen Kettenglieds (2) verläuft.

9. Förderkette nach einem der Ansprüche 1 bis 8, **dadurch gekennzeichnet, dass** die Schwenklagerbolzenelemente (14) in einen Grundkörper (13) des Zwischenglieds (3) eingeschraubt sind.

10. Förderkette nach einem der Ansprüche 1 bis 8, **dadurch gekennzeichnet, dass** das Zwischenglied (3) einschließlich der Schwenklagerbolzenelemente (14) ein einstückiger Formkörper (19) aus Metall ist, der in einen Formkörper (5) aus Kunststoff des anderen Kettenglieds (2) eingegossen, aber diesem gegenüber um die andere Schwenkachse (15) verschwenkbar ist.

11. Förderkette nach einem der Ansprüche 1 bis 10, **dadurch gekennzeichnet, dass** die Schwenklagerbolzenelemente (14) Köpfe (16) mit verstärktem Durchmesser aufweisen.

12. Förderkette nach Anspruch 12, **dadurch gekennzeichnet, dass** der Durchmesser der Schwenklagerbolzenelemente (14) zu ihren Köpfen (16) hin stufenförmig oder stetig, insbesondere kegelförmig, zunimmt.

13. Förderkette nach einem der Ansprüche 1 bis 12, **dadurch gekennzeichnet, dass** ein Grundkörper (13) des Zwischenglieds (3) kreisringförmig oder kreisringsegmentförmig ist.

14. Förderkette nach Anspruch 12 oder 13, **dadurch gekennzeichnet, dass** der Querschnitt des Grundkörpers (13) des Zwischenglieds (3) radial zu der einen Schwenkachse (12) rechteckig, insbesondere quadratisch, oder abgerundet, insbesondere kreisrund, ist.

15. Förderkette nach einem der Ansprüche 1 bis 14, **dadurch gekennzeichnet, dass** an dem einen Ende (8) des einen Kettenglieds sich an dessen Oberseite bis über die Wangen (7) an dem anderen Ende (6) des anderen Kettenglieds (2) erstreckende Plattensegmente (21) quer zu der Förderrichtung (4) vorstehen.

16. Förderkette nach einem der Ansprüche 1 bis 15, **dadurch gekennzeichnet, dass** an jedem Kettenglied (2) zwei Abstützflächen (17) zur Übertragung einer Vortriebskraft auf die Förderkette (1) ausgebildet sind, die senkrecht zu der Förderrichtung (4) jeweils auf Höhe einer der Wangen (9, 10) des Kettenglieds (2) nebeneinander liegen, in welche die Schwenklagerbolzenelemente (14) eingreifen.

17. Förderkette nach Anspruch 16, **dadurch gekennzeichnet, dass** die beiden Abstützflächen (17) an den freien Enden der beiden Wangen (9, 10) jedes Kettenglieds (2) angeordnet sind, in welche die Schwenklagerbolzenelemente (14) eingreifen.

18. Transportvorrichtung für Werkstücksträger mit einer Förderkette nach Anspruch 16 oder 17 und einem ein Antriebsrad (25) aufweisenden Antrieb, wobei das Antriebsrad (25) ein Paar von auf einer Antriebswelle nebeneinander angeordneten, gemeinsam an den Kettengliedern (2) angreifenden Antriebsritzeln (26) umfasst.

## Claims

1. Conveyor chain comprising a plurality of chain links (2), an articulated joint being formed between each two chain links following each other in a conveying direction, the articulated joint having two pivot axes (12, 15) running orthogonal to the conveying direction and across each other, wherein the articulated joint comprises a pivot bearing pin (11) extending in the direction of the one pivot axis between two flanges (9, 10) of the one chain link at its one end, and an intermediate element (3) pivot-mounted on the pivot bearing pin about the one pivot axis (12), the other chain link being pivot-supported at its other end about the other pivot axis (15), **characterized in that** pivot bearing pin elements (14) protruding from the intermediate element (3) in the direction of the other pivot axis (15) engage in flanges (7) at the other end (6) of the other chain link (2).

2. Conveyor chain according to claim 1, **characterized in that** the intermediate element (3) is directly guided between the flanges (9, 10) at the one end (8) of the one chain link (2) in the direction of the one pivot axis (12) and directly guided between the flanges (7) at the other end (6) of the other chain link (2) in the direction of the other pivot axis (15).

3. Conveyor chain according to claims 1 and 2, **characterized in that** the intermediate element (3) is made of metal inclusive of the pivot bearing pin elements (14) extending therefrom, and that it is in contact with the chain links (2) via contact surfaces made of plastic only.

4. Conveyor chain according to any of the claims 1 to 3, **characterized in that** each chain link (2) comprises a one part shaped body (5) made of plastic including the contact surface of the pivot bearing pin (11) with the intermediate element (3).

5. Conveyor chain according to any of the claims 1 to 4, **characterized in that** the pivot bearing pin (11) extends along that pivot axis (12) in which the chain links (2) have their smaller extension orthogonal to the conveying direction (4).

6. Conveyor chain according to any of the claims 1 to 5, **characterized in that** the pivot bearing pin (11) has a coaxial reinforcement (18).

7. Conveyor chain according to claim 6, **characterized in that** the reinforcement (18) is part of metal fittings for strengthening the chain links (2) at their upper side.

8. Conveyor chain according to any of the claims 1 to 7, **characterized in that** the pivot bearing pin (11) extends continuously between the flanges (9, 10) at the one end (8) of the one chain link (2).

9. Conveyor chain according to any of the claims 1 to 8, **characterized in that** the pivot bearing pin elements (14) are screwed into a base body (13) of the intermediate element (3).

10. Conveyor chain according to any of the claims 1 to 8, **characterized in that** the intermediate element (3) is a one part shaped body (19) made of metal and including the pivot bearing pin elements (14), the shaped body (19) made of metal being moulded into a shaped body (5) made of plastic of the other chain link (2) but pivoting with regard to this shaped body (5) made of plastic about the other pivot axis (15).

11. Conveyor chain according to any of the claims 1 to 10, **characterized in that** the pivot bearing pin elements (14) have heads (16) with an extended diameter.

12. Conveyor chain according claim 12, **characterized in that** the diameter of the pivot bearing pin elements (14) increases stepwise or continuously, particularly conically, towards their heads (16).

13. Conveyor chain according to any of the claims 1 to 12, **characterized in that** a base body (13) of the intermediate element (3) has the shape of a torus or a torus segment.

14. Conveyor chain according to claim 12 or 13, **characterized in that**, in radial direction with regard to the one pivot axis (12), the cross section of the base body (13) of the intermediate element (3) is rectangular, particularly square, or rounded, particularly circular.

15. Conveyor chain according to any of the claims 1 to 14, **characterized in that**, at the one end (8) of the one chain link, plate segments (21) protrude laterally to the conveying direction (7), the plate segments (21) extending at the upper side of the one chain link above the flanges (7) at the other end (6) of the other chain link (2).

16. Conveyor chain according to any of the claims 1 to 15, **characterized in that** two supporting surfaces (17) for transferring a drive force onto the conveyor chain (1) are formed at each chain link (2), the supporting surfaces (17) being arranged side by side perpendicular to the conveying direction (4) and each at the level of one of the flanges (9, 10) of the chain link (2) in which the pivot bearing pin elements (14) engage.

17. Conveyor chain according to claim 16, **characterized in that** the two supporting surfaces (17) are provided at the free ends of the two flanges (9, 10) of each chain link (2) in which the pivot bearing pin elements (14) engage.

18. Transport device for work piece carriers comprising a conveyor chain according to claim 16 or 17 and a drive having a drive wheel (25), wherein the drive wheel (25) includes a pair of drive gears (26) which are arranged side by side on a drive shaft and simultaneously engage the chain links (2).

## Revendications

1. Chaîne transporteuse comportant une pluralité de maillons (2), dans laquelle est formée, entre respectivement deux maillons successifs dans une direction de transport, une articulation, qui comporte deux axes de pivotement (12, 15) orientés perpendiculairement à la direction de transport et transversalement l'un à l'autre, l'articulation comportant un axe de palier (11), qui s'étend entre deux joues (9, 10) de l'un des maillons au niveau de l'une de ses extrémités dans la direction de l'un des axes de pivotement, et un maillon intermédiaire (3), qui est monté sur l'axe de palier de manière à pouvoir pivoter autour de l'un des axes de pivotement (12) et sur lequel prend appui l'autre maillon, au niveau de son autre extrémité, de manière à pouvoir pivoter autour de l'autre axe de pivotement (15), **caractérisée en ce que**, de part et d'autre du maillon intermédiaire (3), des axes de palier (14), en saillie dans la direction de l'autre axe de pivotement (15), entrent en prise dans des joues (7) sur l'autre extrémité (6) de l'autre maillon (2).

2. Chaîne transporteuse selon la revendication 1, **caractérisée en ce que** le maillon intermédiaire (3) est logé dans la direction de l'un des axes de pivotement (12) directement entre les joues (9, 10) au niveau de l'une des extrémités (8) de l'un des maillons (2) et dans la direction de l'autre axe de pivotement (15) directement entre les joues (7) sur l'autre extrémité (6) de l'autre maillon (2).

3. Chaîne transporteuse selon les revendications 1 et 2, **caractérisée en ce que** le maillon intermédiaire (3), y compris les axes de palier (14) en saillie sur celui-ci, est réalisé en métal et est en contact avec les maillons (2) uniquement par l'intermédiaire de surfaces de contact en matière plastique.

4. Chaîne transporteuse selon l'une des revendications 1 à 3, **caractérisée en ce que** chaque maillon (2) comporte un corps profilé (5) en matière plastique, réalisé d'un seul tenant en entourant les surfaces de contact de l'axe de palier (11) avec le maillon intermédiaire (3).

5. Chaîne transporteuse selon l'une des revendications 1 à 4, **caractérisée en ce que** l'axe de palier (11) est orienté dans la direction de l'axe de pivotement (12), dans lequel les maillons (2) ont leur plus faible dimension perpendiculairement à la direction de transport (4).

6. Chaîne transporteuse selon l'une des revendications 1 à 5, **caractérisée en ce que** l'axe de palier (11) comporte un insert de renfort (18) disposé coaxialement.

7. Chaîne transporteuse selon la revendication 6, **caractérisée en ce que** l'insert de renfort (18) fait partie d'une ferrure métallique destinée à renforcer le maillon (2) au niveau de son côté supérieur.

8. Chaîne transporteuse selon l'une des revendications 1 à 7, **caractérisée en ce que** l'axe de palier (11) s'étend de part en part entre les joues (9, 10) au niveau de l'une des extrémités (8) de l'un des maillons (2).

9. Chaîne transporteuse selon l'une des revendications 1 à 8, **caractérisée en ce que** les axes de palier (14) sont vissés dans un corps de base (13) du maillon intermédiaire (3).

10. Chaîne transporteuse selon l'une des revendications 1 à 8, **caractérisée en ce que** le maillon intermédiaire (3), y compris les axes de palier (14), est un corps profilé (19) d'un seul tenant en métal, qui est coulé dans un corps profilé (5) en matière plastique de l'autre maillon (2), mais est apte à pivoter par rapport à celui-ci autour de l'autre axe de pivotement (15).

11. Chaîne transporteuse selon l'une des revendications 1 à 10, **caractérisée en ce que** les axes de palier (14) ont des têtes (16) avec un plus grand diamètre.

12. Chaîne transporteuse selon la revendication 12, **caractérisée en ce que** le diamètre des axes de palier (14) augmente par paliers ou en continu, en particulier selon une forme conique, vers la tête (16) desdits axes.

13. Chaîne transporteuse selon l'une des revendications 1 à 12, **caractérisée en ce qu'**un corps de base (13) du maillon intermédiaire (3) est circulaire ou en forme de segment de cercle.

14. Chaîne transporteuse selon la revendication 12 ou 13, **caractérisée en ce que** la section du corps de base (13) du maillon intermédiaire (3), dans le sens radial par rapport à l'un des axes de pivotement (12), est rectangulaire, en particulier carrée, ou arrondie, en particulier ronde.

15. Chaîne transporteuse selon l'une des revendications 1 à 14, **caractérisée en ce que** des segments plats (21), qui s'étendent au niveau de l'une des extrémités (8) de l'un des maillons sur le côté supérieur de celui-ci jusqu'au-dessus des joues (7) au niveau de l'autre extrémité (6) de l'autre maillon (2), s'avancent en saillie transversalement à la direction de transport (4).

16. Chaîne transporteuse selon l'une des revendications 1 à 15, **caractérisée en ce que** sur chaque maillon (2) sont formées deux surfaces d'appui (17) pour transmettre une force de propulsion sur la chaîne transporteuse (1), lesquelles sont disposées l'une à côté de l'autre perpendiculairement à la direction de transport (4), chaque fois à la hauteur de l'une des joues (9, 10) du maillon (2), et dans lesquelles s'engagent les axes de palier (14).

17. Chaîne transporteuse selon la revendication 16, **caractérisée en ce que** les deux surfaces d'appui (17) sont réalisées sur les extrémités libres des deux joues (9, 10) de chaque maillon (2), dans lesquelles s'engagent les axes de palier (14).

18. Dispositif de transport pour des porte-pièces, comportant une chaîne transporteuse selon la revendication 16 ou 17 et un système d'entraînement équipé d'une roue d'entraînement (25), ladite roue d'entraînement (25) comportant des pignons d'entraînement (26), disposés les uns à côté des autres sur un arbre d'entraînement et entrant en prise conjointement avec les maillons (2).
